# EUROPÄISCHE PATENTSCHRIFT

(11) **EP 3 610 643 B1**
(45) Veröffentlichungstag und Bekanntmachung des Hinweises auf die Patenterteilung: **18.08.2021**
(21) Anmeldenummer: 18723356.4
(22) Anmeldetag: 05.03.2018
(51) Int. Cl.: H04N 7/18, B60R 1/00, G06T 3/40

(54) **SURROUND-VIEW-SYSTEM FÜR EIN FAHRZEUG**
SURROUND VIEW SYSTEM FOR A VEHICLE
SURROUND VIEW SYSTEM POUR UN VÉHICULE

(30) Priorität: 11.04.2017 DE 102017206175
(43) Veröffentlichungstag der Anmeldung: 19.02.2020
(73) Patentinhaber: Conti Temic microelectronic GmbH, 90411 Nürnberg (DE)
(72) Erfinder: FRIEBE, Markus, 95482 Gefrees (DE); BÜRKER, Martin, 89073 Ulm (DE)
(74) Vertreter: Continental Corporation
(86) Internationale Anmeldenummer: PCT/DE2018/200021
(87) Internationale Veröffentlichungsnummer: WO 2018/188700

(56) Entgegenhaltungen:
- DE-A1-102013 217 081
- DE-A1-102015 208 343
- US-A1- 2014 347 470

## Beschreibung

Die Erfindung betrifft ein Surround-View-System für ein Fahrzeug. Weiterhin betrifft die Erfindung ein Verfahren zur Entfernung einer unerwünschten Rückprojektion aus einem Bild eines Surround-View-Systems eines Fahrzeugs, wobei die unerwünschte Rückprojektion durch ein bewegliches Teil des Fahrzeugs erzeugt wird.

DE 10 2015 208343 A1 betrifft ein Verfahren zum Erzeugen eines Gesamtbildes einer Fahrzeugumgebung eines Fahrzeuges mittels mehrerer Bilder, die jeweils von einer Kamera von mehreren an dem Fahrzeug angebrachten Kameras aktuell aufgenommen werden. Dabei stellt das Gesamtbild die Fahrzeugumgebung und ein virtuelles Modell des Fahrzeuges aus einer virtuellen Perspektive dar.

In bekannten Funktionen der Bildbearbeitung von Surround-View-Systemen wird insbesondere eine Information über die Lenkung des Fahrzeugs nicht mit einbezogen. In dem Fall, dass zur linken Seite oder zur rechten Seite gelenkt wird, können die Räder des betreffenden Fahrzeugs insbesondere in Bildern von Fisheye-Kameras sichtbar werden und in zweidimensionalen oder dreidimensionalen Bildern des Surround-View-Systems rückprojiziert werden. Auf ähnliche Weise können auch rückprojizierte Artefakte von anderen beweglichen Teilen des Fahrzeugs, z.B. von einer hinteren Tür oder von einem Tankdeckel, in Bildern des Surround-View-Systems sichtbar sein.

Es ist die Aufgabe der vorliegenden Erfindung, ein Surround-View-System und ein Verfahren der eingangs genannten Art bereitzustellen, welche es erlauben, dass die vorstehend genannten Artefakte nicht länger in einem Bild des Surround-View-Systems sichtbar sind.

Die Aufgabe wird gelöst durch die Gegenstände der unabhängigen Patentansprüche. Vorteilhafte Ausführungsformen sind Gegenstand der abhängigen Ansprüche, der folgenden Beschreibung sowie der Figuren.

Gemäß einem ersten Aspekt der Erfindung wird ein Surround-View-System für ein Fahrzeug bereitgestellt. Das Surround-View-System umfasst mehrere Kameras (z.B. auch eine oder mehrere Fisheye-Kameras), welche derart an einem Fahrzeug angeordnet werden können, dass die mehreren Kameras Bilder von einer äußeren Umgebung des Fahrzeugs aufnehmen können.

Weiterhin umfasst das Surround-View-System einen Prozessor. Der Prozessor kann insbesondere kommunikativ mit den mehreren Kameras verbunden sein, sodass der Prozessor insbesondere auf Bilddaten von den mehreren Kameras zugreifen kann.

Der Prozessor ist dazu eingerichtet, eine Stellung und/oder eine Bewegung eines beweglichen Teils des Fahrzeugs zu analysieren. Das Fahrzeug weist aus der Vogelperspektive betrachtet eine äußere Begrenzung bzw. eine Außenkontur auf. Unter den "beweglichen Teilen" können im Zusammenhang mit der vorliegenden Erfindung insbesondere solche Teile verstanden werden, welche eine Vergrößerung dieser Außenkontur bewirken, sofern sich die Teile in eine bestimmte Richtung bewegen. Weiterhin kann der Prozessor dazu eingerichtet sein, eine Stellung und/oder eine Bewegung von mehreren beweglichen Teilen des Fahrzeugs insbesondere gleichzeitig zu analysieren. Die im Folgenden beschriebenen Funktionalitäten und korrespondierenden Verfahrensschritte können entsprechend für mehrere bewegliche Teile des Fahrzeugs erfüllt bzw. ausgeführt werden.

Weiterhin ist der Prozessor dazu eingerichtet, aus von den mehreren Kameras aufgenommenen Bildern der äußeren Umgebung des Fahrzeugs ein zusammengesetztes Bild der äußeren Umgebung des Fahrzeugs zu generieren. Das zusammengesetzte Bild kann insbesondere die äußere Umgebung des Fahrzeugs aus einer Vogelperspektive zeigen, wobei eine künstliche Abbildung des Fahrzeugs an einer die reale Position des Fahrzeugs repräsentierenden Position in das zusammengesetzte Bild eingefügt wird.

Ferner ist der Prozessor dazu eingerichtet, innerhalb des zusammengesetzten Bilds einen Bildbearbeitungsbereich für eine adaptive Bildbearbeitung zu berechnen. Sofern das zusammengesetzte Bild des Surround-View-Systems die Umgebung des Fahrzeugs aus der Vogelperspektive und die künstliche Abbildung des Fahrzeugs zeigt, kann sich der Bildbearbeitungsbereich um die Außenkontur des Fahrzeugs herum erstrecken. Dabei besteht das Bedürfnis, dass der Bildbearbeitungsbereich so klein wie möglich ist.

Des Weiteren ist der Prozessor dazu eingerichtet, basierend auf der analysierten Stellung und/oder Bewegung des beweglichen Teils zu ermitteln, dass eine Rückprojektion des beweglichen Teils den Bildbearbeitungsbereich überschreitet. Die Rückprojektion des beweglichen Teils kann insbesondere dadurch hervorgerufen werden, dass das bewegliche Teil in einer eingefahrenen ersten Position gar nicht oder weniger von der (eigentlichen) Außenkontur des Fahrzeugs absteht, als in einer ausgefahrenen zweiten Position. Eine Darstellung der Rückprojektion des beweglichen Teils in dem zusammengesetzten Bild des Surround-View-Systems kann für einen Betrachter des Bilds störend und daher unerwünscht sein.

Daher ist der Prozessor weiterhin dazu eingerichtet, den Bildbearbeitungsbereich derart zu verändern, insbesondere lokal zu vergrößern, dass die Rückprojektion des beweglichen Teils innerhalb des veränderten Bildbearbeitungsbereichs liegt. Durch das Verändern des Bildbearbeitungsbereichs in Abhängigkeit von der analysierten Stellung und/oder Bewegung des beweglichen Teils, kann der Bildbearbeitungsbereich einerseits insbesondere lokal groß genug gewählt werden, so dass die Rückprojektion des beweglichen Teils sich innerhalb des veränderten Bildbearbeitungsbereichs befindet. Innerhalb des veränderten Bildbearbeitungsbereichs kann die Rückprojektion des beweglichen Teils durch Anwenden von Methoden der adaptiven Bildverarbeitung entfernt oder derart verändert werden, dass sie für einen Betrachter des zusammengesetzten Bilds nicht störend wirkt. Weiterhin wird der Bildbearbeitungsbereich global nicht unnötig groß gewählt, denn es kann präzise vorausgesagt werden, wie stark der Bildbearbeitungsbereich lokal (das heißt dort, wo die Rückprojektion des beweglichen Teils durch seine Bewegung die Außenkontur des Fahrzeugs vergrößert) vergrößert werden muss.

Bevorzugt kann der Prozessor dazu eingerichtet sein, die Rückprojektion des beweglichen Teils durch Anwenden von Methoden der Bildbearbeitung innerhalb des veränderten Bildbearbeitungsbereichs aus dem zusammengesetzten Bild zu entfernen oder innerhalb des veränderten Bildbearbeitungsbereichs zu verändern. Durch das Verändern des Bildbearbeitungsbereichs und das sich anschließende Entfernen bzw. Verändern der Rückprojektion des beweglichen Teils wird ermöglicht, dass die Rückprojektion des beweglichen Teils nicht länger in dem Bild des Surround-View-Systems sichtbar ist oder dort zumindest nicht länger stört.

Gemäß einer Ausführungsform umfasst die Bildbearbeitung eine räumliche Voraussage von Farbinformationen ("spatial prediction of color Information"). Beispielsweise kann der Bildbearbeitungsbereich farblich wie ein Umgebungsbereich eingefärbt werden, welcher den Bildbearbeitungsbereich in dem Bild des Surround-View-Systems umgibt. Zur Ermittlung der Farbe der Umgebungsfläche kann beispielsweise ein Tiefpassfilter eingesetzt werden.

Alternativ oder zusätzlich kann die Bildbearbeitung ein sogenanntes "motion-compensated-texture"-Verfahren umfassen. In diesem Zusammenhang kann insbesondere eine in einem ersten Bild des Surround-View-Systems erkannte Textur für ein nachfolgendes zweites Bild des Surround-View-Systems verwendet werden, wobei die erkannte Textur in dem nachfolgenden zweiten Bild an einer entsprechenden Position innerhalb des Bildbearbeitungsbereichs unter Berücksichtigung der Eigenbewegung des Fahrzeugs eingesetzt werden kann.

Gemäß einer weiteren Ausführungsform ist die Steuerungseinheit dazu eingerichtet, die Stellung und/oder die Bewegung des beweglichen Teils basierend auf Informationen, welche von einem Bussystem des Fahrzeugs bereitgestellt werden, zu analysieren. Diese Ausführungsform ermöglicht insbesondere, dass für die Analyse der Stellung und/oder der Bewegung des beweglichen Teils notwendige Informationen bzw. Daten nicht gesondert erhoben werden müssen. Stattdessen kann auf Daten zurückgegriffen werden, welche insbesondere ohnehin generiert werden, und auf welche über den Datenbus zugegriffen werden kann.

Weiterhin kann es sich bei dem beweglichen Teil um ein Rad des Fahrzeugs handeln, wobei der Prozessor dazu eingerichtet sein kann, einen Lenkwinkel des Rads zu messen (z.B. unter Zuhilfenahme eines entsprechenden Sensors) oder zu ermitteln. Insbesondere kann der Lenkwinkel des Rads von dem Bussystems des Fahrzeugs bereitgestellt werden, und der Prozessor kann auf diese bereitgestellten Lenkwinkel zugreifen.

Weiterhin kann das bewegliche Teil eine Tür, eine Heckklappe, eine Motorhaube, ein verschwenkbarer Seitenspiegel oder ein Tankdeckel des Fahrzeugs sein.

Gemäß einem zweiten Aspekt der Erfindung wird ein Fahrzeug bereitgestellt, welches ein Surround-View-System gemäß dem ersten Aspekt der Erfindung umfasst. Bei dem Fahrzeug handelt es sich beispielsweise um ein Kraftfahrzeug, wie Auto, Bus oder Lastkraftwagen.

Gemäß einem dritten Aspekt der Erfindung wird ein Verfahren zur Entfernung einer unerwünschten Rückprojektion aus einem Bild eines Surround-View-Systems eines Fahrzeugs bereitgestellt. Das Verfahren umfasst die folgenden Schritte:
- Aufnehmen mehrerer Bilder von einer äußeren Umgebung des Fahrzeugs mittels mehrerer Kameras eines Surround-View-Systems des Fahrzeugs,
- Analysieren einer Stellung und/oder einer Bewegung eines beweglichen Teils des Fahrzeugs,
- Generieren eines zusammengesetzten Bilds der äußeren Umgebung des Fahrzeugs aus den mehreren aufgenommenen Bildern der äußeren Umgebung des Fahrzeugs,
- Berechnen eines Bildbearbeitungsbereichs für eine adaptive Bildbearbeitung innerhalb des zusammengesetzten Bilds,
- Ermitteln basierend auf der analysierten Stellung und/oder Bewegung des beweglichen Teils, dass eine Rückprojektion des beweglichen Teils den Bildbearbeitungsbereich überschreitet,
- Verändern des Bildbearbeitungsbereichs derart, dass die Rückprojektion des beweglichen Teils innerhalb des veränderten Bildbearbeitungsbereichs liegt, und bevorzugt
- Entfernen der Rückprojektion des beweglichen Teils aus dem zusammengesetzten Bild oder Verändern der Rückprojektion des beweglichen Teils innerhalb des veränderten Bildbearbeitungsbereichs durch Anwenden von Methoden der Bildbearbeitung innerhalb des veränderten Bildbearbeitungsbereichs.

Bezüglich Effekten, Vorteilen und Ausführungsformen des Verfahrens gemäß dem dritten Aspekt der Erfindung wird zur Vermeidung von Wiederholungen auf die obigen Ausführungen im Zusammenhang mit dem Surround-View-System gemäß dem ersten Aspekt der Erfindung verwiesen. Dabei können insbesondere die im Zusammenhang mit den Ausführungsformen des Surround-View-Systems gemäß dem ersten Aspekt der Erfindung beschriebenen funktionalen Merkmale als entsprechende Verfahrensmerkmale für entsprechende Ausführungsformen des Verfahrens gemäß dem dritten Aspekt der Erfindung umgesetzt werden.

Gemäß einem vierten Aspekt der Erfindung wird ein Programmelement bereitgestellt, das, wenn es auf einem Prozessor ausgeführt wird, den Prozessor anleitet, die Verfahrensschritte des Verfahrens gemäß dem dritten Aspekt der Erfindung durchzuführen.

Gemäß einem fünften Aspekt der Erfindung wird ein computerlesbares Medium bereitgestellt, auf dem ein Programmelement gespeichert ist, das, wenn es auf einem Prozessor ausgeführt wird, den Prozessor anleitet, die Verfahrensschritte des Verfahrens gemäß dem dritten Aspekt der Erfindung durchzuführen.

Im Folgenden werden Ausführungsbeispiele der Erfindung anhand der schematischen und nicht maßstabsgetreuen Zeichnung näher erläutert. Hierbei zeigt
- Fig. 1: eine Seitenansicht eines Kraftfahrzeugs,
- Fig. 2: eine stark schematisierte Draufsicht auf das Kraftfahrzeug nach Fig. 1, wobei ein Surround-View-System des Kraftfahrzeugs dargestellt ist,
- Fig. 3: ein Bild des Surround-View-Systems nach Fig. 2 und
- Fig. 4: das Bild nach Fig. 3, wobei ein Bildbearbeitungsbereich durch einen Prozessor des Surround-View-Systems verändert worden ist.

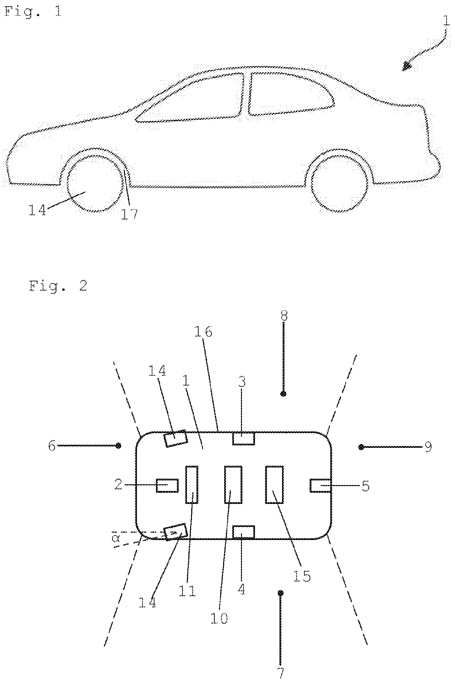

Fig.1 und 2 zeigen ein Fahrzeug in Form eines Kraftfahrzeugs 1. Das Kraftfahrzeug 1 weist vier Kameras 2 bis 5 auf, welche in Fig. 2 dargestellt sind. Fig. 2 zeigt wie die vier Kameras 2 bis 5 des Fahrzeugs 1 angeordnet sein können. Weiterhin sind mögliche Blickfelder 6 bis 9 der Kameras 2 bis 5 gezeigt. Das Fahrzeug 1 umfasst dabei eine erste Kamera 2, eine zweite Kamera 3, eine dritte Kamera 4 und eine vierte Kamera 5. Weiterhin sind innerhalb des Fahrzeugs 1 ein Prozessor 10 und eine optische Ausgabeeinheit in Form eines Monitors 11 angeordnet, wobei sich der Monitor 11 im Blickfeld eines Fahrers des Fahrzeugs 1 befindet. Der Prozessor 10 kann mit den vier Kameras 2 bis 5 kommunikativ verbunden sein und insbesondere Bilddaten von den vier Kameras 2 bis 5 empfangen bzw. auf die Bilddaten zugreifen.

In dem durch Fig. 2 gezeigten Ausführungsbeispiel ist die erste Kamera 2 in einem vorderen Bereich des Fahrzeugs 1 angeordnet (z.B. im Innenraum im Bereich hinter einer Windschutzscheibe des Fahrzeugs 1) und erfasst ein im Wesentlichen vorderes Blickfeld 6 in einer äußeren Umgebung des Fahrzeugs 1. Die zweite Kamera 3 und die dritte Kamera 4 sind jeweils seitlich an dem Fahrzeug 1 angeordnet und erfassen jeweils ein im Wesentlichen seitliches Blickfeld 7 bzw. 8 in der äußeren Umgebung des Fahrzeugs 1. Die dritte Kamera 5 ist in einem hinteren Bereich des Fahrzeugs 1 angeordnet und erfasst ein im Wesentlichen hinteres Blickfeld 9 in der äußeren Umgebung des Fahrzeugs 1. Die vier Blickfelder 15 bis 18 der vier Kameras 2 bis 5 können gemeinsam den gesamten Umfang (360°) des Fahrzeugs 1 abdecken.

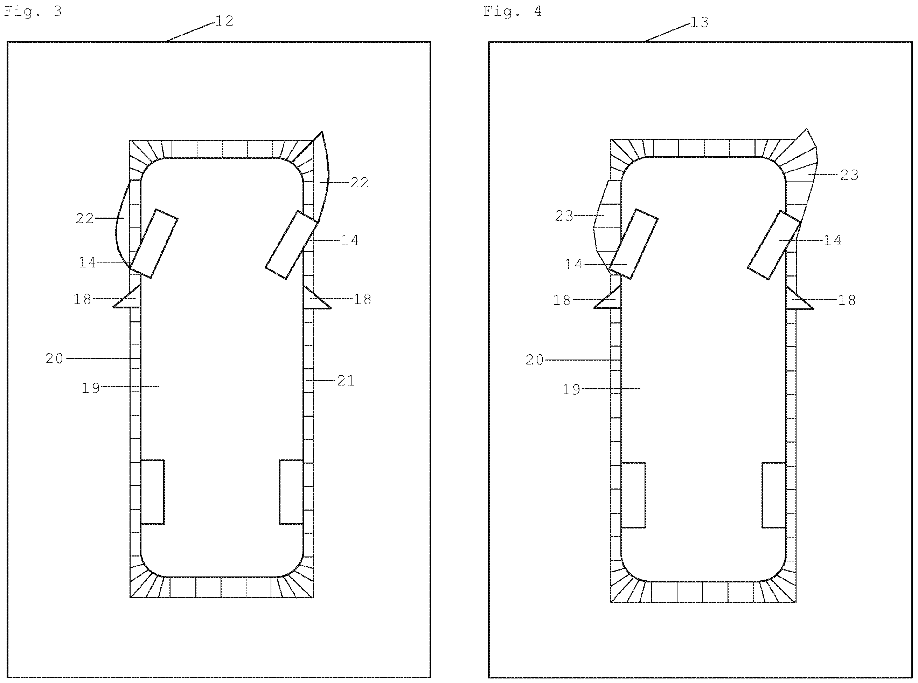

Die 4 Kameras 2 bis 5 des Fahrzeugs 1 können zeitgleich Bildaufnahmen in ihren jeweiligen Blickfeldern 6 bis 9 machen, wobei entsprechende Bilddaten insbesondere mittels des Prozessors 10 zu einem zweidimensionalen oder dreidimensionalen Fahrzeug-Rundumbild 12, 13 (vgl. Fig. 3 und 4) zusammengefügt und auf dem Monitor 11 angezeigt werden können.

Das Fahrzeug 1 weist weiterhin 2 verstellbare Vorderräder 14 auf, welche in bekannter Weise nach links oder nach rechts verstellt werden können, sodass das Fahrzeug 1 nach links bzw. nach rechts gelenkt werden kann. Ein entsprechender Lenkwinkel α kann in bekannter Weise erfasst werden. Insbesondere kann der erfasste Lenkwinkel von einem Datenbus 15 des Fahrzeugs 1 abgerufen werden. Insbesondere kann die Steuerungseinheit 10 den Lenkwinkel von dem Datenbus 15 abrufen. Auf diese Weise kann mittels des Prozessors 10 eine Stellung α und/oder eine Bewegung eines beweglichen Teils 14 des Fahrzeugs 1 analysiert werden.

Die Vorderräder 14 stellen jeweils ein bewegliches Teil des Fahrzeugs 1 dar. Diese beweglichen Teile ermöglichen, dass durch ihre Verstellung, in dem gezeigten Ausführungsbeispiel durch eine Verstellung des Lenkwinkels α der Vorderräder 14, eine aus der Vogelperspektive betrachtete Außenkontur 16 des Fahrzeugs 1 vergrößert werden kann. Bezogen auf das durch Fig. 2 gezeigte Ausführungsbeispiel wird dies dadurch erreicht, dass bei dem gezeigten Lenkwinkel α die Vorderräder 14 ein Stück weit seitlich aus Radkästen 17 des Fahrzeugs 1 herausragen. Ein ähnlicher Effekt kann beispielsweise durch eine Tür, eine Heckklappe, eine Motorhaube, einen verschwenkbaren Seitenspiegel 18 (vgl. Fig. 3 und 4) oder einen Tankdeckel des Fahrzeugs 1 entstehen.

Fig. 3 und 4 zeigen jeweils ein Bild 12, 13 des Surround-View-Systems, wobei das Bild 12, 13 jeweils aus einzelnen, zeitgleich aufgenommenen Bildern der Kameras 2 bis 5 zusammengesetzt ist. Das Bild 13 nach Fig. 4 basiert dabei auf dem Bild 12 nach Fig. 3. Die Bilder 12, 13 sind derart zusammengesetzt und aufgearbeitet, dass die äußere Umgebung 6 bis 9 des Fahrzeugs 1 aus der Vogelperspektive sichtbar ist. Ein künstlich erzeugtes Bild 19 des Fahrzeugs 1 ist dabei jeweils in die Bilder 12, 13 eingefügt. Das Bild 19 des Fahrzeugs 1 weist dabei eine Außenkontur 20 auf, welche mit der tatsächlichen Außenkontur 16 des Fahrzeugs 1 korrespondiert. Weiterhin ist das Bild 19 des Fahrzeugs 1 an einer mit der tatsächlichen Position des Fahrzeugs 1 korrespondierenden Position innerhalb des Bilds 12, 13 angeordnet. Das Einfügen des künstlich erzeugten Bilds 19 des Fahrzeugs 1 kann insbesondere mittels des Prozessors 10 erfolgen.

Innerhalb des zusammengesetzten Bilds 12 wird insbesondere mittels des Prozessors 10 ein Bildbearbeitungsbereich 21 für eine adaptive Bildbearbeitung berechnet. Der Bildbearbeitungsbereich 21 ist in Fig. 3 durch Rasterlinien dargestellt, wobei der Bildbearbeitungsbereich 21 das Bild 19 des Fahrzeugs 1 seitlich umgibt. Innerhalb des Bildbearbeitungsbereichs 21 kann das zusammengesetzte Bild 12 durch Anwenden von Methoden der adaptiven Bildbearbeitung verändert werden. Dabei können beispielsweise an sich bekannte Verfahren wie "spatial prediction of color information" oder "motion compensated texture" zum Einsatz kommen.

Basierend auf der analysierten Stellung α der Vorderräder 14 kann insbesondere mittels des Prozessors 10 ermittelt werden, dass eine Rückprojektion 22 (deren Begrenzung in Fig. 3 zur Verdeutlichung mit einer stärken Linie dargestellt ist als der Bildbearbeitungsbereich 21) innerhalb des zusammengesetzten Bilds 12 den Bildbearbeitungsbereich 21 überschreitet. Um dem entgegenzuwirken kann insbesondere mittels des Prozessors 10 der Bildbearbeitungsbereich 21 derart verändert werden, dass die Rückprojektion 22 der Vorderräder 14 innerhalb des nunmehr veränderten Bildbearbeitungsbereichs 23 liegt, wie dies durch Fig. 4 gezeigt ist. Dazu wird der Bildbearbeitungsbereich 21 im Bereich der Rückprojektion der Vorderräder 14 lokal derart vergrößert, dass die Rückprojektion 22 der Vorderräder 14 innerhalb des lokal vergrößerten Bildbearbeitungsbereichs 23 liegt. In anderen Bereichen, in welchen es nicht zu einer Vergrößerung der Außenkontur 20 kommt, kann der Bildbearbeitungsbereich 21 in seiner ursprünglich berechneten Größe belassen werden.

Innerhalb des veränderten Bildbearbeitungsbereichs 22 kann die Rückprojektion 22 der Vorderräder 14 durch Anwenden von Methoden der adaptiven Bildverarbeitung derart verändert werden, dass sie für einen Betrachter des zusammengesetzten Bilds 13 nicht mehr störend wirkt. Dabei kann die Rückprojektion 22 der Vorderräder 14 auch aus dem Bild 13 entfernt werden.

## Patentansprüche

1. Surround-View-System für ein Fahrzeug (1), das Surround-View-System umfassend:
- mehrere Kameras (2 bis 5), welche derart an einem Fahrzeug (1) angeordnet werden können, dass die mehreren Kameras (2 bis 5) Bilder (12, 13) von einer äußeren Umgebung (6 bis 9) des Fahrzeugs (1) aufnehmen können, und
- einen Prozessor (10), wobei der Prozessor (10) dazu eingerichtet ist,
- eine Stellung (a) und/oder eine Bewegung eines beweglichen Teils (14) des Fahrzeugs (1) zu analysieren,
- aus von den mehreren Kameras (2 bis 5) aufgenommenen Bildern der äußeren Umgebung (6 bis 9) des Fahrzeugs (1) ein zusammengesetztes Bild (12, 13) der äußeren Umgebung (6 bis 9) des Fahrzeugs (1) zu generieren,
- innerhalb des zusammengesetzten Bilds (12) einen Bildbearbeitungsbereich (21) für eine adaptive Bildbearbeitung zu berechnen,
- basierend auf der analysierten Stellung und/oder Bewegung des beweglichen Teils (14) zu ermitteln, dass eine Rückprojektion (22) des beweglichen Teils (14) den Bildbearbeitungsbereich (21) überschreitet, und
- den Bildbearbeitungsbereich (21) derart zu verändern, dass die Rückprojektion (22) des beweglichen Teils (14) innerhalb des veränderten Bildbearbeitungsbereichs (23) liegt.

2. Surround-View-System nach Anspruch 1, wobei der Prozessor (10) dazu eingerichtet ist, die Rückprojektion (22) des beweglichen Teils (14) durch Anwenden von Methoden der Bildbearbeitung innerhalb des veränderten Bildbearbeitungsbereichs (23) aus dem zusammengesetzten Bild (13) zu entfernen oder innerhalb des veränderten Bildbearbeitungsbereichs (23) zu verändern.

3. Surround-View-System nach Anspruch 2, wobei die Bildbearbeitung eine räumliche Voraussage von Farbinformationen umfasst.

4. Surround-View-System nach Anspruch 2 oder 3, wobei die Bildbearbeitung ein motion-compensated-texture-Verfahren umfasst.

5. Surround-View-System nach einem der vorstehenden Ansprüche, wobei die Steuerungseinheit dazu eingerichtet ist, die Stellung (a) und/oder die Bewegung des beweglichen Teils (14) basierend auf Informationen, welche von einem Bussystem (15) des Fahrzeugs (1) bereitgestellt werden, zu analysieren.

6. Surround-View-System nach einem der vorstehenden Ansprüche, wobei das bewegliche Teil ein Rad (14) des Fahrzeugs (1) ist, und wobei der Prozessor (10) dazu eingerichtet ist, einen Lenkwinkel (a) des Rads (14) zu messen oder zu ermitteln.

7. Surround-View-System nach einem der vorstehenden Ansprüche, wobei das bewegliche Teil eine Tür, eine Heckklappe, eine Motorhaube, ein verschwenkbarer Seitenspiegel (18) oder ein Tankdeckel des Fahrzeugs (1) ist.

8. Fahrzeug (1), umfassend ein Surround-View-System nach einem der vorstehenden Ansprüche.

9. Verfahren zur Entfernung einer unerwünschten Rückprojektion (22) aus einem Bild (13) eines Surround-View-Systems eines Fahrzeugs (1), das Verfahren umfassend die Schritte:
- Aufnehmen mehrerer Bilder von einer äußeren Umgebung (6 bis 9) des Fahrzeugs (1) mittels mehrerer Kameras (2 bis 5) eines Surround-View-Systems des Fahrzeugs (1),
- Analysieren einer Stellung (a) und/oder einer Bewegung eines beweglichen Teils (14) des Fahrzeugs (1),
- Generieren eines zusammengesetzten Bilds (12) der äußeren Umgebung (6 bis 9) des Fahrzeugs (1) aus den mehreren aufgenommenen Bildern der äußeren Umgebung (6 bis 9) des Fahrzeugs (1),
- Berechnen eines Bildbearbeitungsbereichs (21) für eine adaptive Bildbearbeitung innerhalb des zusammengesetzten Bilds (12),
- Ermitteln basierend auf der analysierten Stellung (a) und/oder Bewegung des beweglichen Teils (14), dass eine Rückprojektion (22) des beweglichen Teils (14) den Bildbearbeitungsbereich (21) überschreitet,
- Verändern des Bildbearbeitungsbereichs (21) derart, dass die Rückprojektion (22) des beweglichen Teils (14) innerhalb des veränderten Bildbearbeitungsbereichs (23) liegt.

10. Programmelement, das, wenn es auf einem Prozessor (10) ausgeführt wird, den Prozessor (10) anleitet, die Verfahrensschritte des Verfahrens gemäß Anspruch 9 durchzuführen.

11. Computerlesbares Medium, auf dem ein Programmelement gespeichert ist, das, wenn es auf einem Prozessor (10) ausgeführt wird, den Prozessor (10) anleitet, die Verfahrensschritte des Verfahrens gemäß Anspruch 9 durchzuführen.

## Claims

1. Surround view system for a vehicle (1), with the surround view system comprising:
- a plurality of cameras (2 to 5), which can be arranged at a vehicle (1) such that the plurality of cameras (2 to 5) can record images (12, 13) of an external environment (6 to 9) of the vehicle (1), and
- a processor (10), wherein the processor (10) is configured for
- analysing a position (α) and/or a movement of a movable part (14) of the vehicle (1),
- generating a composite image (12, 13) of the external environment (6 to 9) of the vehicle (1) from images of the external environment (6 to 9) of the vehicle (1) that have been recorded by the plurality of cameras (2 to 5),
- calculating an image processing region (21) within the composite image (12) for adaptive image processing,
- ascertaining, based on the analysed position and/or movement of the movable part (14), that a back projection (22) of the movable part (14) extends outside the image processing region (21), and
- changing the image processing region (21) such that the back projection (22) of the movable part (14) lies within the changed image processing region (23).

2. Surround view system according to Claim 1, wherein the processor (10) is configured for removing the back projection (22) of the movable part (14) from the composite image (13) by applying methods of image processing within the changed image processing region (23) or changing it within the changed image processing region (23).

3. Surround view system according to Claim 2, wherein the image processing comprises a spatial prediction of colour information.

4. Surround view system according to Claim 2 or 3, wherein the image processing comprises a motion-compensated-texture method.

5. Surround view system according to one of the preceding claims, wherein the control unit is configured for analysing the position (α) and/or the movement of the movable part (14) based on information provided by a bus system (15) of the vehicle (1).

6. Surround view system according to one of the preceding claims, wherein the movable part is a wheel (14) of the vehicle (1), and wherein the processor (10) is configured for measuring or ascertaining a steering angle (α) of the wheel (14).

7. Surround view system according to one of the preceding claims, wherein the movable part is a door, a tailgate, a bonnet, a pivotable side-view mirror (18) or a fuel cap of the vehicle (1).

8. Vehicle (1), comprising a surround view system according to one of the preceding claims.

9. Method for removing an undesirable back projection (22) from an image (13) of a surround view system of a vehicle (1), with the method comprising the steps of:
- recording a plurality of images of an external environment (6 to 9) of the vehicle (1) using a plurality of cameras (2 to 5) of a surround view system of the vehicle (1),
- analysing a position (α) and/or a movement of a movable part (14) of the vehicle (1),
- generating a composite image (12) of the external environment (6 to 9) of the vehicle (1) from the plurality of recorded images of the external environment (6 to 9) of the vehicle (1),
- calculating an image processing region (21) for adaptive image processing within the composite image (12),
- ascertaining, based on the analysed position (α) and/or movement of the movable part (14), that a back projection (22) of the movable part (14) extends outside the image processing region (21),
- changing the image processing region (21) such that the back projection (22) of the movable part (14) lies within the changed image processing region (23).

10. Program element, which, if it is executed on a processor (10), instructs the processor (10) to carry out the method steps of the method according to Claim 9.

11. Computer-readable medium, on which a program element is stored, which, if it is executed on a processor (10), instructs the processor (10) to carry out the method steps of the method according to Claim 9.

## Revendications

1. Système de vision panoramique destiné à un véhicule (1), le système de vision panoramique comprenant :
- une pluralité de caméras (2 à 5) qui peuvent être disposées sur un véhicule (1) de telle sorte que la pluralité de caméras (2 à 5) capturent des images (12, 13) d'un environnement extérieur (6 à 9) du véhicule (1), et
- un processeur (10), le processeur (10) étant conçu pour
- analyser une position (a) et/ou un mouvement d'une partie mobile (14) du véhicule (1),
- générer une image composite (12, 13) de l'environnement extérieur (6 à 9) du véhicule (1) à partir d'images de l'environnement extérieur (6 à 9) du véhicule (1) qui ont été capturées par les différentes caméras (2 à 5),
- calculer une zone de traitement d'image (21) destinée à un traitement d'image adaptatif à l'intérieur de l'image composite (12),
- déterminer sur la base de la position et/ou du mouvement analysés de la partie mobile (14) qu'une rétroprojection (22) de la partie mobile (14) dépasse la zone de traitement d'image (21), et
- modifier la zone de traitement d'image (21) de telle sorte que la rétroprojection (22) de la partie mobile (14) se trouve à l'intérieur de la zone de traitement d'image modifiée (23).

2. Système de vision panoramique selon la revendication 1, le processeur (10) étant conçu pour supprimer la rétroprojection (22) de la partie mobile (14) en appliquant des procédés de traitement d'image à l'intérieur de la zone de traitement d'image modifiée (23) à partir de l'image composite (13) ou pour la modifier dans la zone de traitement d'image modifiée (23) .

3. Système de vision panoramique selon la revendication 2, le traitement d'image comprenant une prédiction spatiale d'informations de couleur.

4. Système de vision panoramique selon la revendication 2 ou 3, le traitement d'image comprenant un procédé de texture à compensation de mouvement.

5. Système de vision panoramique selon l'une des revendications précédentes, l'unité de commande étant conçue pour analyser la position (a) et/ou le mouvement de la partie mobile (14) en fonction d'informations reçues d'un système de bus (15) du véhicule (1).

6. Système de vision panoramique selon l'une des revendications précédentes, la partie mobile étant une roue (14) du véhicule (1), et le processeur (10) étant conçu pour mesurer ou déterminer un angle de braquage (a) de la roue (14).

7. Système de vision panoramique selon l'une des revendications précédentes, la pièce mobile étant une porte, un hayon, un capot, un rétroviseur latéral pivotant (18) ou un bouchon de réservoir du véhicule (1) .

8. Véhicule (1) comprenant un système de vision panoramique selon l'une des revendications précédentes.

9. Procédé de suppression d'une rétroprojection indésirable (22) d'une image (13) d'un système de vision panoramique d'un véhicule (1), le procédé comprenant les étapes suivantes :
- capturer une pluralité d'images d'un environnement extérieur (6 à 9) du véhicule (1) au moyen d'une pluralité de caméras (2 à 5) d'un système de vision panoramique du véhicule (1),
- analyser une position (a) et/ou un mouvement d'une partie mobile (14) du véhicule (1),
- générer une image composite (12) de l'environnement extérieur (6 à 9) du véhicule (1) à partir de la pluralité d'images capturées de l'environnement extérieur (6 à 9) du véhicule (1),
- calculer une zone de traitement d'image (21) destinée à un traitement d'image adaptatif à l'intérieur de l'image composite (12),
- déterminer sur la base de la position (a) et/ou du mouvement analysés de la partie mobile (14) qu'une rétroprojection (22) de la partie mobile (14) dépasse la zone de traitement d'image (21),
- modifier la zone de traitement d'image (21) de telle sorte que la rétroprojection (22) de la partie mobile (14) se trouve à l'intérieur de la zone de traitement d'image modifiée (23).

10. Elément de programme qui, lorsqu'il est exécuté sur un processeur (10), commande au processeur (10) d'exécuter les étapes de procédé selon la revendication 9.

11. Support lisible par ordinateur sur lequel est stocké un élément de programme qui, lorsqu'il est exécuté sur un processeur (10), commande au processeur (10) d'exécuter les étapes de procédé selon la revendication 9.
